# EUROPÄISCHE PATENTSCHRIFT

(11) **EP 4 214 409 B1**
(45) Veröffentlichungstag und Bekanntmachung des Hinweises auf die Patenterteilung: **26.06.2024**
(21) Anmeldenummer: 21778000.6
(22) Anmeldetag: 15.09.2021
(51) Int. Cl.: F02K 9/52, F23D 14/48

(54) **BRENNKAMMERANORDNUNG**
COMBUSTION CHAMBER ARRANGEMENT
AGENCEMENT DE CHAMBRE DE COMBUSTION

(30) Priorität: 18.09.2020 DE 102020124413
(43) Veröffentlichungstag der Anmeldung: 26.07.2023
(73) Patentinhaber: Deutsches Zentrum für Luft- und Raumfahrt e.V., 53227 Bonn (DE)
(72) Erfinder: WERLING, Lukas, 70771 Leinfelden-Echterdingen (DE); MANASSIS, Konstantin, 71563 Affalterbach (DE)
(74) Vertreter: Fleck, Julia Maria
(86) Internationale Anmeldenummer: PCT/EP2021/075360
(87) Internationale Veröffentlichungsnummer: WO 2022/058369

(56) Entgegenhaltungen:
- EP-A1- 2 881 666
- WO-A1-2020/010098
- DE-A1-102004 029 029
- DE-A1-102010 043 336
- FR-A1- 2 975 442

## Beschreibung

Die Erfindung betrifft eine Brennkammeranordnung mit einem entlang einer Längsachse ausgerichteten Brennraum und mit einer stirnseitig des Brennraums angeordneten Injektoranordnung zum Einbringen reaktiver Fluide in den Brennraum, umfassend eine erste Injektoreinrichtung mit einer ersten Auslassanordnung mit zumindest einer ersten Auslassfläche zum Einbringen des ersten Fluids und eine zweite Injektoreinrichtung mit einer zweiten Auslassanordnung mit zumindest einer zweiten Auslassfläche zum Einbringen des zweiten Fluids.

Derartige Brennkammeranordnungen, wie sie insbesondere bei Raketentriebwerken mit chemischem Antrieb zum Einsatz kommen, nutzen ein Zweikomponenten- bzw. Bipropellantsystem, wobei zwei Fluide, insbesondere Brennstoff und Oxidator, in den Brennraum eingebracht werden und miteinander unter Wärmefreisetzung reagieren. Als Oxidator finden beispielsweise flüssiger Sauerstoff, Wasserstoffperoxid (H₂O₂) oder Lachgas (N₂O) und als Brennstoff z. B. Wasserstoff, Methan oder Kerosin Verwendung. Weiterhin können z. B. hypergole (sich bei Kontakt spontan entzündende) Treibstoffe wie Monomethylhydrazin (MMH, Summenformel CH₆N₂) als Brennstoff und Distickstofftetroxid (N₂O₄) als Oxidator in Zweikomponentensystemen eingesetzt werden.

Eine wichtige Aufgabe bei Bipropellantsystemen kommt der Injektoranordnung als Einspritzelement der Fluide in dem Brennraum zu. Die Injektoranordnung verbindet die Zuleitung von Oxidator und Brennstoff mit den Brennraum. Dabei soll die Injektoranordnung insbesondere eine feine Zerstäubung des Oxidators und des Brennstoffes ermöglichen, wobei feine, schnell verdampfende Tröpfchen entstehen. Ferner ist eine gute Durchmischung von Oxidator und Brennstoff zu gewährleisten und der Brennraum von der Treibstoffzuleitung zu entkoppeln, so dass Brennkammerschwingungen gedämpft werden und sich nicht in Form von Druckschwankungen in dieselbe fortpflanzen können. Dies wird gewöhnlich über einen gewissen Druckverlust über die Injektoranordnung erreicht.

In der DE 10 2004 029 029 A1 ist eine Brennkammeranordnung mit einem Einspritzkopf angegeben, der mehrere in Richtung der Mittelachse ineinander greifende Segmente aufweist. Zwischen den Segmenten sind Strömungskanäle bildende Zwischenräume angeordnet, in die in einer Ausbildungsvariante poröse Strömungsfestlegungselemente eingesetzt sein können. Die in einen Auslassbereich einströmenden Fluidströme können unter anderem koaxial oder einander überkreuzend angeordnet sein.

Die FR 2 975 442 A1 zeigt ein Injektionselement für ein Raketentriebwerk mit zwei konzentrisch und koaxial zueinander angeordneten Leitungen zur koaxialen Zugabe zweier Treibmittel. In der ersten Leitung ist ein poröses Element angeordnet, um die Strömung des Treibmittels zu verlangsamen und durch die so entstehende Scherung einhergehend mit Turbulenzbildung eine homogene Mischung der beiden Treibmittel zu erreichen.

Eine Injektoranordnung der eingangs genannten Art ist beispielsweise in der WO 2009/080595 A2 angegeben. Dabei wird ein erstes Fluid durch ein erstes poröses Element dem Brennraum zugegeben und ein zweites Fluid durch Fluidleitungen, die das erste poröse Element durchsetzen. Stromauf der Fluidleitungen strömt das zweite Fluid durch ein zweites poröses Element. Mithilfe der porösen Elemente können die Fluide in fein verteilter Form in die Brennkammer eingebracht werden.

In der DE 10 2010 043 337 A1 ist eine Fluidzuführungsvorrichtung mit einem ersten und einem zweiten porösen Element angegeben, wobei das erste poröse Element mittels der zweiten Fluidzuführung stabilisiert ist.

Die WO 97/08442 A1 zeigt einen Brenner für ein Raketentriebwerk mit einem porösen Element. Das poröse Element umfasst eine oder mehrere Öffnungen, durch welche hohle Einspritzelemente geführt sind.

In der EP 3 246 557 A1 ist ein Raketenantriebssystem mit einer Brennkammer angegeben, wobei ein Teil des Sauerstoffs als Fluid über einen Drallerzeuger entlang der Brennkammerwandung eingebracht wird.

In der US 3 699 772 A ist eine koaxiale Injektoranordnung angegeben. Bei dem gezeigten Injektor dient ein Drehbolzen mit einer Kappe und Schlitzen als erste Auslassanordnung zur Zugabe einer Treibstoffkomponente in eine Brennkammer. Der Drehbolzen ist von einer Schelle unter Bildung einer schlitzartigen Zugabeöffnung als zweite Auslassanordnung umgeben.

Die US 2013/0 160 426 A1 zeigt eine Injektorvorrichtung für ein Raketentriebwerk mit getrennter Zugabe von Oxidator und Brennstoff über eine Oxidator-Sammelleitung und einen Oxidator-Hohlraum sowie eine Brennstoff-Sammelleitung und einen Brennstoff-Hohlraum. Ein poröses Element ist nicht gezeigt.

Weitere Brennkammeranordnungen mit Einspritzelementen sind in der WO 2005/049998 A1 und der GB 1 289 934 A genannt.

Der Erfindung liegt die Aufgabe zugrunde, eine Brennkammeranordnung der eingangs genannten Art bereitzustellen, wobei die Durchmischung der Fluide und damit verbunden die Verbrennungseffizienz weiter verbessert ist.

Die Aufgabe wird mit den Merkmalen des Anspruchs 1 gelöst. Dabei ist vorgesehen, dass die zumindest eine, insbesondere ringförmige, zweite Auslassfläche die (gesamte) zumindest eine erste Auslassfläche unter Zwischenordnung einer fluidundurchlässigen Trennung (z. B. einer Wandung) ringförmig radial (in Umlaufrichtung) umlaufend umgebend angeordnet ist und ein stirnseitig an den Brennraum angrenzendes zweites poröses Element zur Bildung der zweiten Auslassfläche zu dem Brennraum aufweist.

Insbesondere ist die (gesamte) zweite Auslassanordnung (mit der bzw. allen zweite/n Auslassfläche/n) die (gesamte) erste Auslassanordnung (mit der bzw. allen erste/n Auslassfläche/n) radial (in Umfangsrichtung) umgebend angeordnet, in Art eines Koaxialinjektors. Die erste/n Auslassfläche/n durchsetzt/durchsetzen nicht die zweite/n Auslassfläche/n. Die Längsachse bildet dabei vorzugsweise eine Mittellängsachse bzw. Symmetrieachse der zweiten und/oder ersten Auslassanordnung, insbesondere der ersten und/oder zweiten Auslassfläche/n. Im Betrieb tritt das zweite Fluid durch das zweite poröse Element in die Brennkammer ein, an dem die zweite Auslassfläche gebildet ist. Die zweite Auslassfläche ist insbesondere senkrecht zur Längsachse ausgerichtet. Eine Auslassanordnung umfasst definitionsgemäß zumindest einen Fluiddurchlass, der ausgehend von einem Verteilerraum mit der Auslassfläche in den Brennraum mündet (oder ist aus einem solchen Fluiddurchlass gebildet) und weist dabei insbesondere eine oder mehrere Vorrichtungen zur Bildung des Fluiddurchlasses auf, z. B. einen porösen Körper, einen Auslasskanal oder mehrere Auslasskanäle, z. B. Bohrungen, Düse/n oder Ähnliches, durch die das jeweilige Fluid in den Brennraum strömt, bzw. die in den Brennraum mündet/münden.

Einsetzbare Materialien für das (offenporige) poröse Element sind beispielsweise Sintermetalle, z. B. aus Bronze (CuSn12), welche eine gute Wärmeleitfähigkeit aufweisen, Sintermetalle aus Superlegierungen wie Inconel^{®}718 (mit einer hohen Temperaturfestigkeit) oder poröse keramische Strukturen (z. B. Aluminiumnitrit (AIN), Siliziumnitrit (Si₃N₄) oder Aluminiumoxid (Al₂O₃)), mit hohen zulässigen Temperaturen. Die Porosität sollte mehr als 10 % betragen, z. B. zwischen 30 % und 60 %, und wird unter Berücksichtigung eines einzustellenden Druckverlustes zur Dämpfung von Druckschwankungen ausgewählt.

Durch die radiale, insbesondere koaxiale (und/oder symmetrische), Anordnung der zweiten Auslassfläche um die erste Auslassanordnung bzw. die erste/n Auslassfläche/n kann die Reaktion des ersten Fluids mit dem zweiten Fluid radial an der innen liegenden Seite der Strömung des zweiten Fluids stattfinden, wobei zwischen den Strömungen stabilisierende Rezirkulationszonen bzw. Totwassergebiete erzeugbar sind, welche der Durchmischung und damit der Verbrennungseffizienz zuträglich sind. Weiterhin kann das außenströmende (zweite) Fluid vorteilhaft kühlend auf die Wandstrukturen der Brennkammeranordnung wirken.

Die besonders gute Kühlfilm-Wirkung wird dabei erfindungsgemäß dadurch erreicht, dass die zweite Auslassfläche radial angrenzend von einer den Brennraum in axialer Richtung radial umlaufend, insbesondere zylindrisch, umgrenzenden Brennkammerwandung umgeben ist. Die Brennkammerwandung schließt sich insbesondere axial erstreckend, vorzugsweise rechtwinklig, an die Stirnseite an. So legt sich im Betrieb das zweite Fluid als Kühlfilm an die Brennkammerwandung, so dass eine insbesondere konvektive Kühlung der Brennkammerwandung mittels eines vergleichsweise dicken, gleichmäßigen Kühlfilms erreichbar ist.

Eine vorteilhafte Wirkung sowohl bzgl. Kühlung als auch Einmischung des ersten in das zweite Fluid ergibt sich, wenn eine radiale Dicke d der Auslassfläche zwischen 2/3 und 1/5, vorzugsweise zwischen 1/2 und 1/4, eines Durchmessers D einer eintrittsseitig an dem Brennraum angeordneten Stirnseite des Brennraums beträgt, der vorzugsweise dem Durchmesser des Brennraums zumindest im Wesentlichen entspricht. Die Stirnseite begrenzt den Brennraum auf der Eintrittsseite, an der auch die stirnseitige Injektoranordnung zur Zufuhr des zweiten und/oder des ersten Fluids angeordnet ist. Vorzugsweise liegt die Stirnseite zumindest großteils (z. B. abgesehen von einem Vorsprung) in einer senkrecht zur Längsachse ausgerichteten Ebene.

Eine möglichst gleichmäßige Einströmung des zweiten Fluids in das zweite poröse Element und anschließend in den Brennraum ist vorteilhaft erreichbar, wenn die zweite Injektoreinrichtung zumindest einen stromauf an das zweite poröse Element angrenzenden, insbesondere ringförmigen, Verteilerraum aufweist, durch welchen das zweite Fluid in das zweite poröse Element eintreten kann bzw. im Betrieb eintritt.

Eine zusätzliche Kühlung der Brennkammerwandung ist erreichbar, wenn zumindest ein, vorzugsweise mehrere, zweite/r Zufuhrkanal/Zufuhrkanäle zur Zufuhr des zweiten Fluids in den Verteilerraum vorhanden ist/sind, der/die von einem stromabseitigen Ende des Brennraums, und/oder zumindest teilweise in thermischem Kontakt zu einer an dem stromabseitigen Ende des Brennraums anschließenden Düsenanordnung, innerhalb der Brennkammerwandung geführt ist/sind und in den Verteilerraum mündet/münden.

Für eine möglichst gleichmäßige Strömungsverteilung innerhalb des Verteilerraums bzw. des anschließenden zweiten porösen Elements münden vorzugsweise mehrere zweite Zufuhrkanäle in den Verteilerraum, deren Mündungen symmetrisch bezüglich des Verteilerraums verteilt angeordnet sind. Beispielsweise sind die Mündungen dabei um den Umfang verteilt äquidistant zueinander, bei vier Mündungen z. B. in einem Versatz von 90° zueinander (kreuzförmig) angeordnet. Zur Vermeidung von Temperaturunterschieden und damit Spannungen im Material sind möglichst viele, kleine Zufuhrkanäle vorteilhaft.

Zwecks einfacher Montage ist das zweite poröse Element vorzugsweise formschlüssig innerhalb eines Brennkammermaterials aufgenommen, wobei es am stromabseitigen Ende insbesondere durch eine geeignete geometrische Formgebung, wie einen (z. B. radial ringförmigen) Anschlag (insbesondere auf axialer Höhe der Auslassfläche), axial fixiert ist. Das Brennkammermaterial bildet dabei insbesondere das Vollmaterial, aus dem die Brennkammeranordnung zumindest teilweise, insbesondere zumindest großteils, gefertigt ist und/oder welches auch die Brennkammerwandung bildet. Das Brennkammermaterial bildet insbesondere auch das Vollmaterial der Injektoranordnung, innerhalb derer der Anschlag gebildet ist. In der stromaufweisenden Richtung kann ein Fixierelement, beispielsweise ein Teil der ersten Injektoreinrichtung und/oder eine Hülse, zur Fixierung vorhanden sein. Für eine einfache Montage können so das zweite poröse Element zunächst auf den Anschlag geschoben und anschließend z. B. das Fixierelement eingesetzt werden.

Vorzugsweise umfasst die erste Injektoreinrichtung (z. B. genau) einen ersten Zufuhrkanal zur Zufuhr eines ersten Fluids an die erste Auslassanordnung, der zentral auf der Längsachse verläuft und insbesondere radial zumindest bereichsweise von dem Verteilerraum und/oder dem zweiten porösen Element umgeben ist. Der Zufuhrkanal ist insbesondere koaxial zu dem Verteilerraum und/oder dem zweiten porösen Element angeordnet. Mittels des Zufuhrkanals kann das erste Fluid durch das zweite poröse Element an die erste Auslassanordnung und/oder die erste/n Auslassfläche/n strömen.

Eine besonders präzise und effiziente Einmischung des ersten Fluids mit dem zweiten Fluid ist erreichbar, wenn die erste Injektoreinrichtung einen Vorsprung (gegenüber der zweiten Auslassfläche) in den Brennraum umfasst, an dem die zumindest eine erste Auslassfläche (alle bzw. die gesamte/n Auslassfläche/n) angeordnet ist, wobei die zumindest eine erste Auslassfläche der zweiten Auslassfläche axial zum Brennraum hin vorgelagert (d. h. weiter in den Brennraum hinein positioniert) ist. Die axiale Ausdehnung des Vorsprungs beträgt vorzugsweise weniger als der Durchmesser D der Stirnseite bzw. des Brennraums (beispielsweise weniger als zwei Drittel oder ein Drittel) und ist z. B. für eine möglichst kompakte Brennraumlänge kurz, jedoch ausreichend lang für eine Beabstandung der Reaktionszone von der zweiten Austrittsfläche ausgebildet. Insbesondere richtet sich die axiale Ausdehnung nach der erforderlichen Auslassfläche, die durch Auslegung unter Berücksichtigung des einzustellenden Druckverlustes zur Dämpfung von Druckschwankungen und des erforderlichen Fluid-Massenstroms ermittelt wird. Der Vorsprung ist vorzugsweise auf der Längsachse L und koaxial (insbesondere symmetrisch) zu dem zweiten porösen Element angeordnet.

In einer besonders bevorzugten Ausbildungsvariante ist die erste Auslassanordnung derart ausgebildet ist, dass das erste Fluid mit einer radial nach außen gerichteten Richtungskomponente zugebbar bzw. zugegeben ist. Die Zugabe erfolgt z. B. drallfrei, mit einer ausschließlich radialen oder mit einer zusätzlichen axialen Richtungskomponente, oder durch entsprechende Ausbildung der Auslasskanäle drallbehaftet. Durch die radiale Einbringung des ersten Fluids in das (bezüglich der Hauptströmungsrichtung ausschließlich) axial einströmende zweite Fluid kann die Durchmischung zwischen dem ersten und dem zweiten Fluid gegenüber z. B. konventionellen Koaxialinjektoren oder einem porösen Koaxialinjektor verbessert werden. Auf diese Weise kann z. B. die Effizienz eines Raketentriebwerks gesteigert und/oder Bauraum desselben reduziert werden.

Dabei kann es zweckmäßig sein, dass die erste Auslassanordnung in dem Vorsprung angeordnete und daraus austretende, radial-axial verlaufende Auslasskanäle, insbesondere (gerade verlaufende) Bohrungen, umfasst, mittels welchen das (z. B. gesamte) erste Fluid in einem Winkel α (betreffend die Hauptströmungsrichtung) zwischen 20° und 80°, vorzugsweise zwischen 30° und 60°, bezüglich der axialen Richtung in den Brennraum zugebbar bzw. zugegeben ist. Auf diese Weise erfolgt die Zugabe mit einer sowohl axialen als radialen Richtungskomponente. Die Anzahl der Bohrungen beträgt je nach Brennkammerauslegung z. B. zwischen 3 und 20, beispielsweise zwischen 4 und 10. Eine höhere Anzahl ermöglicht eine gleichmäßigere Verteilung des Fluids in dem Brennraum. Die Anzahl der Auslasskanäle bzw. Bohrungen hängt insbesondere von der Schubklasse bzw. der Größe des Triebwerks bzw. dem Massenstrom an Fluid ab. Die Auslassflächen sind jeweils am stromabseitigen Ende der Auslasskanäle bzw. Bohrungen angeordnet. Durch axial-radiale Zugabe werden Rezirkulationszonen unmittelbar stromab des Vorsprungs sowie zwischen den ersten Auslassflächen und der zweiten Auslassfläche erzeugt. Die Rezirkulationszonen bewirken eine verbesserte Durchmischung der beiden Treibstoffkomponenten und können somit die Effizienz eines Raketentriebwerks erhöhen. Zudem dienen die Rezirkulationszonen der Flammenstabilisierung. Die Durchmischung wird weiterhin durch den Querimpuls der aus den Bohrungen austretenden Strahlen des ersten Fluids beim Auftreffen auf das zweite Fluid begünstigt, wobei ausgeprägte Turbulenzen hervorgerufen werden.

Für eine möglichst gleichmäßige und kompakte Durchmischung sind vorzugsweise die Auslasskanäle, insbesondere Bohrungen bzw., die Auslassflächen der Auslassanordnung in Umlaufrichtung (und/oder radial) äquidistant und/oder axial auf einer oder mehreren Höhe/n angeordnet.

In einer einfach zu fertigenden, strömungstechnisch effizienten Variante geht der erste Zufuhrkanal stromab innerhalb eines konischen Endabschnitts, insbesondere innerhalb des Vorsprungs, in die Bohrungen der ersten Auslassanordnung über. Das stromabseitige Ende des konischen Abschnitts ist insbesondere abgestumpft bzw. abgerundet. Die Bohrungen bzw. Auslasskanäle gehen z. B. rechtwinklig von der konischen Wand ab.

In einer weiteren bevorzugten Ausbildungsvariante umfasst der Vorsprung ein erstes poröses Element bzw. ist insbesondere durch dieses gebildet. Dabei weist das erste poröse Element insbesondere eine zylindrische Form auf, wobei ein Teil des ersten porösen Elements über die zweite Auslassfläche zur Bildung des Vorsprungs übersteht. Als Materialen eignen sich insbesondere die in Bezug aus das zweite poröse Element genannten Materialen. Der Einsatz einer weiteren porösen Struktur in Form des ersten porösen Elements bewirkt eine ebenfalls diffuse, großflächige Ausströmung des ersten Fluids, die mit geringen Strömungsgeschwindigkeiten verbunden mit geringen Druckverlusten einhergehen kann. Die geringen Strömungsgeschwindigkeiten, der diffuse Ausströmvorgang und die geringen Druckverlust erlauben sowohl eine gute Durchmischung des ersten und des zweiten Fluids als auch eine gute Drosselung der Massenströme. Durch geeignete Auswahl der Porositäten (größer als 10 %, z. B. zwischen 30 % und 60 %), der Flächenverhältnisse der Strömungsquerschnitte (der ersten und der zweiten Ausströmflächen) und/oder der axialen Längen der ersten und/oder zweiten porösen Elemente kann/können der Druckverlust, die Strömungsgeschwindigkeit und der Massenstrom durch die jeweilige Injektoreinrichtung definiert werden.

Bei dieser Variante ist eine effiziente Durchmischung insbesondere dadurch erreichbar, dass das erste poröse Element derart ausgebildet und/oder angeordnet ist, dass das erste Fluid mit, insbesondere ausschließlich, radialer Richtungskomponente (bezüglich der Hauptströmungsrichtung) aus dem ersten porösen Element in den Brennraum eintritt. Aufgrund des insbesondere senkrechten Aufeinandertreffens des ersten und zweiten Fluids ergeben sich mehrere Totwassergebiete und/oder Rezirkulationszonen stromab des Vorsprungs und/oder der ersten Auslassfläche, wodurch eine Stabilisierung der Flamme und eine gute Durchmischung erreicht werden.

Eine diesbezüglich besonders zweckmäßige Ausbildung ergibt sich, wenn das erste poröse Element zumindest im Bereich des Vorsprungs einen (kreis-)ringförmigen Querschnitt aufweist, wobei es insbesondere zylindrisch oder konisch ausgebildet ist, wobei eine axial stromab begrenzende Stirnfläche, z. B. durch geeignete Bearbeitung, wie Versiegelung, fluidundurchlässig ausgebildet ist. Dabei bildet die Umfangswandung des Vorsprungs bzw. des Zylinders die erste Auslassfläche.

Für eine kontrollierte Strömungsführung und Vermeidung von Flammenrückschlag ist vorzugsweise das zweite poröse Element und/oder das erste poröse Element gegenüber dem umgebenden Material (z. B. dem Brennkammermaterial) durch Einpressen und/oder mittels eines Dichtelements, z. B. einer Teflonschicht oder einer Graphitdichtung, gedichtet.

Nachfolgend wird die Erfindung anhand von Ausführungsbeispielen unter Bezugnahme auf die Zeichnungen näher erläutert. Es zeigen:
- Fig. 1: eine erfindungsgemäße Brennkammeranordnung mit zwei Injektoreinrichtungen gemäß einer ersten Ausführungsvariante in einer perspektivischen Darstellung im Längsschnitt,
- Fig. 2: einen Teil der Brennkammeranordnung gemäß Fig. 1 mit den beiden Injektoreinrichtungen im Längsschnitt,
- Fig. 3: einen Querschnitt mit dem Schnittverlauf A-A gemäß Fig. 2 in perspektivischer Ansicht,
- Fig. 4: einen Querschnitt mit dem Schnittverlauf B-B gemäß Fig. 2 in perspektivischer Ansicht,
- Fig. 5: eine erfindungsgemäße Brennkammeranordnung mit zwei Injektoreinrichtungen gemäß einer zweiten Ausführungsvariante in einer perspektivischen Darstellung im Längsschnitt und
- Fig. 6: einen Teil der Brennkammeranordnung gemäß Fig. 5 mit den beiden Injektoreinrichtungen im Längsschnitt.

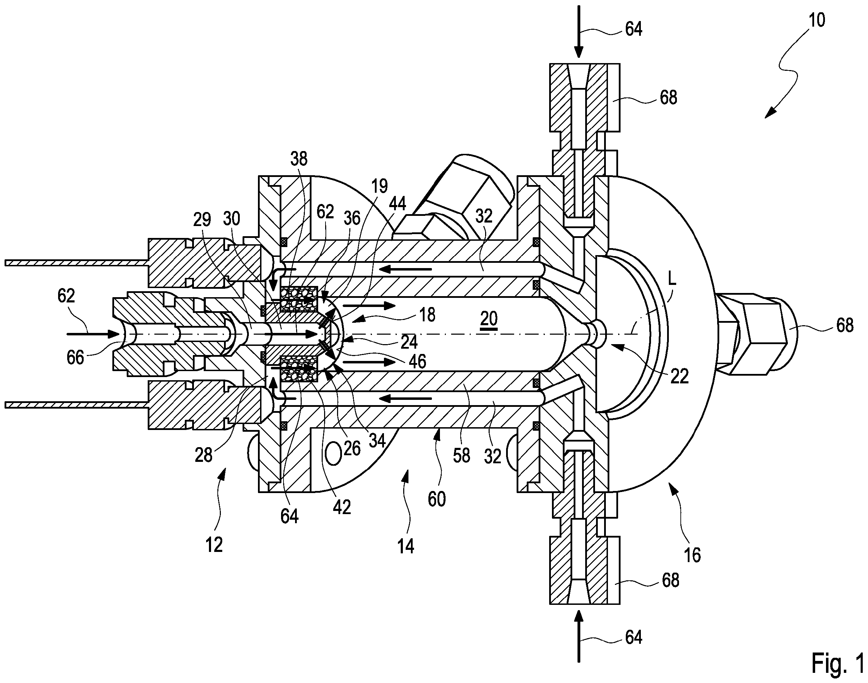

Fig. 1 zeigt eine erste Ausführungsvariante einer Brennkammeranordnung 10 insbesondere zum Einsatz in einem Raketentriebwerk beispielsweise in Orbitalantrieben mit einem chemischen Antrieb, welcher ein Zweikomponenten- bzw. BipropellantSystem nutzt. Weitere Einsatzgebiete betreffen z. B. Trägerraketen und/oder Roll-Control Systeme von Raketen und Stufen. Aufgrund der kompakten Bauweise der Brennkammeranordnung 10 ist diese besonders auch für Triebwerke in Kleinsatelliten, Landeeinheiten und Sonden geeignet.

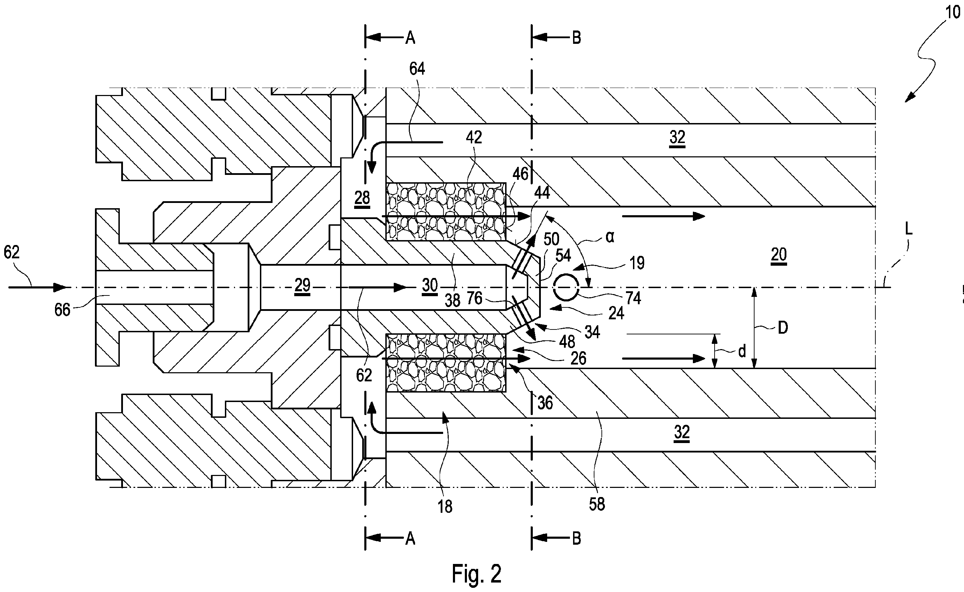

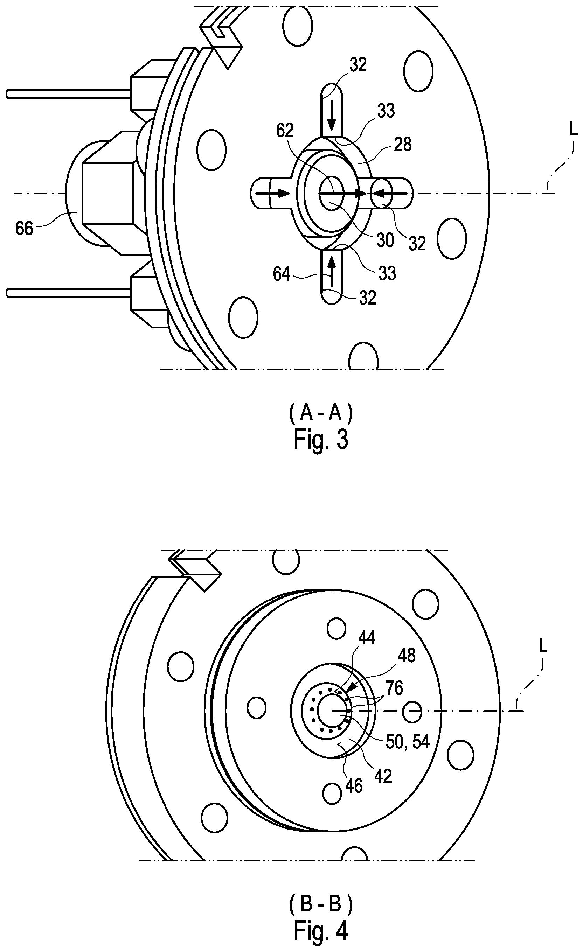

Die Brennkammeranordnung 10 umfasst ein Zufuhrsegment 12 mit zumindest Teilen einer Injektoranordnung 18 zur Zugabe zumindest zweier Fluide 62, 64 zur Reaktion miteinander, insbesondere Oxidator und Brennstoff, in einen hier beispielhaft zylindrischen Brennraum 20. Die Strömungsführung der Fluide 62, 64 ist in Fig. 1 (sowie in Fig. 2 und Fig. 3) durch Pfeile verdeutlicht. Weiterhin umfasst die Brennkammeranordnung 10 ein Brennkammersegment 14 mit dem rotationssymmetrisch zu einer Mittellängsachse L ausgerichteten Brennraum 20, in dem im Betrieb die chemische Reaktion der Fluide 62, 64 miteinander stattfindet. Zudem umfasst die Brennkammeranordnung 20 ein Düsensegment 16, welches eine Düsenanordnung 22 zur Schuberzeugung mittels des aus dem Brennraum 20 austretenden, bei der chemischen Reaktion entstandenen Gases aufweist. Die Segmente sind insbesondere form- und/oder stoffschlüssig miteinander verbunden.

Die Injektoranordnung 18 ist an einer stromaufgelegenen Stirnseite 19 des Brennraums 20 angeordnet. Zum Einbringen des ersten Fluids 62 in den Brennraum 20 weist die Injektoranordnung 18 eine erste Injektoreinrichtung 24 mit einer ersten Auslassanordnung 34 umfassend zumindest eine erste Auslassfläche 44 auf. Zum Einbringen des zweiten Fluids 64 in den Brennraum 20 weist die Injektoranordnung 18 zudem eine zweite Injektoreinrichtung 26 mit einer zweiten Auslassanordnung 36 umfassend vorzugsweise eine zweite Auslassfläche 46 auf. Die Auslassanordnungen 34, 36 sind insbesondere von einem Fluiddurchlass gebildet, der mit der jeweiligen Auslassfläche 44, 46 in den Brennraum 20 mündet. Der jeweilige Fluiddurchlass umfasst insbesondere eine oder mehrere Vorrichtung/en, z. B. poröse Körper, eine oder mehrere Auslasskanäle, z. B. Bohrungen, Düse/n oder Ähnliches, durch die das jeweilige Fluid in den Brennraum 20 strömt, bzw. die in den Brennraum 20 mündet/münden.

Wie Fig. 2 genauer zeigt, umfasst die zweite Auslassanordnung 36 ein zweites poröses Element 42, welches an seinem stromabseitigen Ende unter Bildung der zweiten Auslassfläche 46 an den Brennraum 20 angrenzt. Die zweite Auslassanordnung 36 bzw. das zweite poröse Element 42 ist derart angeordnet, dass sie bzw. es die erste Auslassanordnung 34 ringförmig bzw. zylindrisch radial umgibt. So sind die erste Auslassanordnung 34 und die zweite Auslassanordnung 36 konzentrisch zueinander und insbesondere symmetrisch um die Mittellängsachse L angeordnet.

Die radiale Ausdehnung bzw. Dicke d der zweiten Auslassfläche 46 beträgt vorliegend beispielhaft etwa die Hälfte des Durchmessers D einer eingangsseitigen Stirnseite 19 des Brennraums 20, vorliegend entsprechend dem Durchmesser D des Brennraums 20. Die radiale Dicke d ist durch Auslegung zu ermitteln und richtet sich nach Auslegungsparametern wie beispielsweise dem Druckverlust, Strömungsgeschwindigkeit und/oder der erwünschten Schichtdicke an zweitem Fluid 64 innerhalb des Brennraums 20 im Betrieb. Die radiale Dicke des gesamten zweiten porösen Elements 42 entspricht vorzugsweise zumindest der radialen Dicke d der zweiten Auslassfläche 46. Im Falle einer formschlüssigen axialen Fixierung ist die radiale Dicke des zweiten porösen Elements 42 vorzugsweise größer als die radiale Dicke d der zweiten Auslassfläche 46.

Zwischen der zweiten Auslassanordnung 36 bzw. dem zweiten porösen Element 42 und der ersten Auslassanordnung 34 ist eine fluidundurchlässige Trennung, hier in Form einer Wandung 38 der ersten Injektoreinrichtung 24, vorhanden. So sind die Strömungswege des ersten Fluids 62 und des zweiten Fluids 64 innerhalb der Injektoranordnung 18 voneinander getrennt, so dass keine Vormischung stattfindet. Die Strömungswege treffen im Betrieb innerhalb des Brennraums 20 aufeinander.

Das zweite poröse Element 42 ist mit der zweiten Auslassfläche 46 an seinem Außenumfang radial angrenzend von einer den Brennraum 20 in axialer Richtung radial umgrenzenden (in seiner radialen Ausdehnung begrenzenden) Brennkammerwandung 58 umgeben. Die Brennkammerwandung 58 schließt sich insbesondere axial erstreckend, vorzugsweise rechtwinklig, an die Stirnseite 19 an. Das zweite poröse Element 42 ist von der Wandung 38 und der Brennkammerwandung 58 zumindest im Wesentlichen fluiddicht eingefasst, beispielsweise durch Einpressung in einen zwischen der Wandung 38 und der Brennkammerwandung 58 vorhandenen, komplementären Hohlraum und/oder unter Zwischenordnung eines Dichtelements, beispielsweise einer Teflonschicht.

Das zweite poröse Element 42 ist vorliegend beispielhaft mittels einer entsprechend geometrischen Formgebung innerhalb des umgebenden Brennkammermaterials 60 axial fixiert, vorliegend stromab in Form einer außen radial umgebend angeordneten Kante bzw. eines radial abstehenden Ringbundes. Dabei weist das zweite poröse Element 42 eine größere radiale Dicke auf als die zweite Auslassfläche 46. Stromauf bildet die erste Auslassanordnung 34, genauer eine Wandung 38 eines ersten Zufuhrkanals 30, eine radial bezüglich des zweiten porösen Elements 42 innen liegende Kante zur axialen Fixierung stromauf.

Wie Fig. 3 in einem Querschnitt entlang einer Schnittebene A-A (gemäß Fig. 2) durch die Injektoranordnung 18 genauer zeigt, umfasst die zweite Injektoreinrichtung 26 vorliegend beispielhaft einen ringförmigen, an das zweite poröse Element 42 angrenzenden Verteilerraum 28. Durch den Verteilerraum 28 kann das zweite Fluid 64 in das zweite poröse Element 46 eintreten. Zur Zugabe des zweiten Fluids 64 in den Verteilerraum 28 umfasst die Brennkammeranordnung 10 vorliegend beispielhaft vier (davon zwei in Fig. 2 ersichtliche) zweite Zufuhrkanäle 32, die im Betrieb jeweils von einer zweiten Zuführleitung 68 mit zweitem Fluid 64 gespeist werden. Zu Kühlzwecken verlaufen die zweiten Zufuhrkanäle 32, im Gegenstrom zu der Strömung innerhalb der Brennkammer 20, ausgehend von einem Bereich der Düsenanordnung 22 an einem stromabseitigen Ende der Brennkammer 20 entlang derselben innerhalb der Brennkammerwandung 58 und münden mit Mündungen 33 in den Verteilerraum 28 (vgl. Fig. 3). Der Querschnitt und/oder der Verlauf der zweiten Zufuhrkanäle 32 ist vorzugsweise hinsichtlich des Wärmeübergangs optimiert, wobei die zweiten Zufuhrkanäle 32 z. B. einen runden, rechteckigen oder ovalen Querschnitt aufweisen können. Die Mündungen 33 der zweiten Zufuhrkanäle 68 sind radial und/oder in Umlaufrichtung äquidistant zueinander bezüglich des Verteilerraums 28 angeordnet, vorliegend in einem Winkel von 90° zueinander, um eine möglichst symmetrische Einströmung des zweiten Fluids 64 in den Verteilerraum 28 und symmetrische Verteilung über das zweite poröse Element 42 zu erreichen.

Die erste Injektoreinrichtung 24 (vgl. insbesondere Fig. 2) umfasst den ersten Zufuhrkanal 30 zur Zufuhr des ersten Fluids 62 an die erste Auslassanordnung 34. Der erste Zufuhrkanal 30 wird im Betrieb von einer ersten Zuführleitung 66 mit dem ersten Fluid 62 gespeist, wobei die Zuführleitung 66 mittels eines rohrartigen Übergangsabschnitts 29 der ersten Injektoreinrichtung 24 in den ersten Zufuhrkanal 30 übergeht.

Der erste Zufuhrkanal 30 verläuft, von der Wandung 38 rohrartig umgeben, zentral auf der Mittellängsachse L durch den Verteilerraum 28 und (in der ersten Ausbildungsvariante) durch das zweite poröse Element 42 und ist zumindest in diesem axialen Bereich von der Wandung 38 umgrenzt. Am stromauf angeordneten Ende ist die Wandung 38 zur Bildung der umlaufenden Kante bzw. des Ringbundes zur Fixierung des zweiten porösen Elements 42 nach außen verdickt.

Die Wandung 38 setzt sich in axialer Richtung auch über die axiale Position der zweiten Auslassfläche 46 fort und bildet auf diese Weise einen der zweiten Austrittsfläche 46 axial vorgelagerten Vorsprung 48. Innerhalb des Vorsprungs 48 weist der erste Zufuhrkanal 30 einen konischen bzw. kegelstumpfartigen Endabschnitt 50 auf. Möglich ist auch eine abgerundete Form. Innerhalb des Endabschnittes 50 geht der erste Zufuhrkanal 30 in die erste Auslassanordnung 34 über.

Die erste Auslassanordnung 34 innerhalb des Vorsprungs 48 weist mehrere, beispielsweise zwischen 3 und 12, Auslasskanäle vorliegend in Form von Bohrungen 76 auf. Wie Fig. 4 in einem Querschnitt entlang einer Schnittebene B-B (gemäß Fig. 2) genauer zeigt, sind die Bohrungen 76 axial auf einer Höhe (ringartig) und für eine symmetrische Einströmung in den Brennraum 20 in Umlaufrichtung äquidistant zueinander angeordnet. Möglich ist auch eine Anordnung der Bohrungen 76 auf mehreren axialen Höhen, auf mehreren axial hintereinander angeordneten gedachten Ringen. An den jeweiligen stromabgelegenen Enden der Bohrungen 76 weisen diese eine erste Auslassfläche 44 auf, an der die Bohrungen 76 in den Brennraum 20 münden. Die ersten Auslassflächen 44 sind somit der zweiten Auslassfläche 46 axial vorgelagert.

Die Bohrungen 76 sind axial-radial ausgerichtet, so dass das erste Fluid im Betrieb drallfrei in axial-radialer Richtung nach außen in den Brennraum 20 zugegeben wird. Ein Winkel α (Fig. 2) zwischen der axialen Richtung und der axial-radialen Richtung des ausströmenden Fluid beträgt hier beispielhaft 60°.

Das stromabseitige Ende des Endabschnittes 50 bzw. des Vorsprungs 48 ist durch eine orthogonal zur Mittellängsachse L ausgerichtete Stirnfläche 54 gebildet. Durch diese Ausbildung in Kombination mit der Strömungsführung des ersten Fluids kann sich im Betrieb stromab des Vorsprungs 48 eine stabilisierende Rezirkulationszone 74 ausbilden.

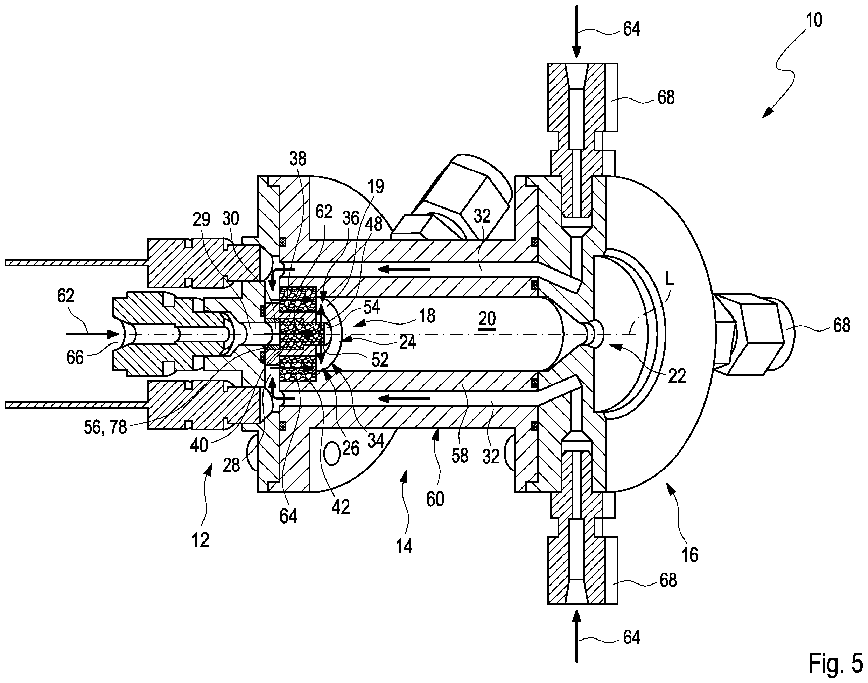

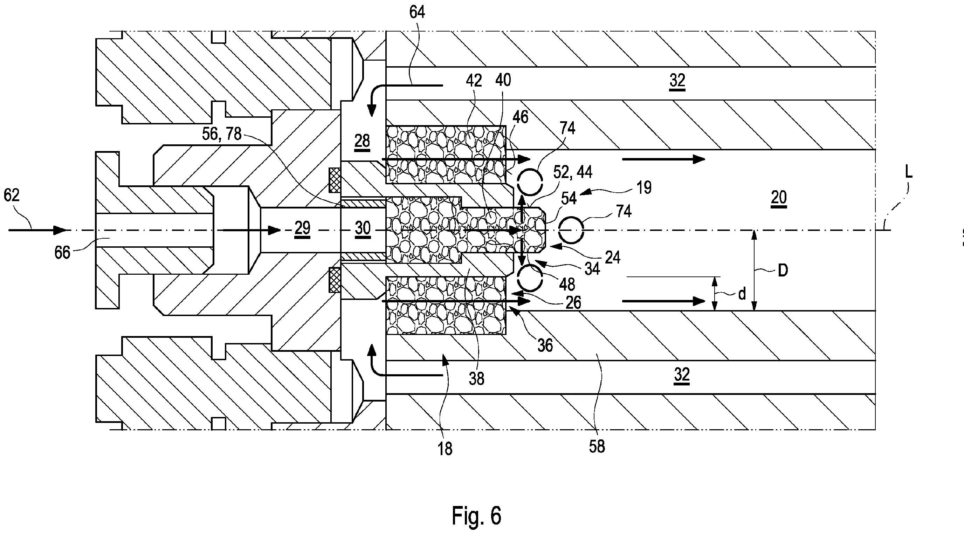

Die Figuren 5 und 6 zeigen eine zweite Ausbildungsvariante der Brennkammeranordnung 10 in einem Längsschnitt. Die zweite Ausbildungsvariante unterscheidet sich von der in Fig. 1 bis 4 gezeigten insbesondere durch die Ausbildung der ersten Injektoreinrichtung 24, die hierbei ein zylindrisches erstes poröses Element 40 aufweist. Die Strömungsführung der Fluide 62, 64 ist in den Figuren 5 und 6 wiederum durch Pfeile verdeutlicht.

Das erste poröse Element 40 ist symmetrisch um die Mittellängsachse L koaxial zu dem zweiten porösen Element 42 angeordnet und von diesem ringförmig umgeben. Die stromaufseitigen Enden der (offenporigen) porösen Elemente 40, 42 liegen vorliegend beispielhaft auf der gleichen axialen Position. Zwischen dem ersten porösen Element 40 und dem zweiten porösen Element 42 ist zur fluidundurchlässigen Trennung der Stömungswege durch die erste Injektoreinrichtung 24 und die zweite Injektoreinrichtung 26 die Wandung 38 angeordnet, die zumindest im Bereich der porösen Elemente 40, 42 eine geringere Wandstärke aufweist als in dem Ausführungsbeispiel gemäß den Figuren 1 bis 4.

Zur axialen Fixierung des ersten porösen Elements 40 in die stromauf weisende Richtung weist die Wandung 38 eine geeignete geometrische Formgebung auf, vorliegend eine umlaufende Kante. Das erste poröse Element 40 weist einen komplementären Querschnittssprung auf, wobei die Kante der Wandung 38 einen Anschlag für den Querschnittssprung bildet. Das erste poröse Element 40 ist, wie auch das zweite poröse Element 42, gegenüber der Wandung 38 z. B. durch Einpressen oder mittels eines Dichtelements (z. B. Teflon) fluiddicht gedichtet.

Das erste poröse Element 40 ist vorliegend der ersten Auslassanordnung 34 zuzuordnen bzw. bildet diese. Insbesondere ist der Vorsprung 48 von einem stromab angeordneten Endabschnitt des ersten porösen Elements 40 gebildet. Der Vorsprung 38 weist eine entsprechende zylindrische Form auf. Die axial stromab begrenzende Stirnfläche 54 des ersten porösen Elements 40 ist durch geeignete Bearbeitung, beispielsweise Versiegelung, fluidundurchlässig ausgebildet. Eine zylindrische Umfangswand 52 des Vorsprungs 48 ist offenporig ausgebildet. Somit kann das erste Fluid 62 im Betrieb mit einer (näherungsweise) ausschließlich radialen (Hauptströmungs-) Richtungskomponente aus dem ersten porösen Element 40 in den Brennraum 20 eintreten, wobei die Umfangswand 52 die erste Auslassfläche 44 bildet.

Stromauf des ersten porösen Elements 40 ist zu dessen axialer Fixierung ein durchströmbares Fixierelement 56, vorliegend eine Hülse 78, zwischen dem Übergangsabschnitt 29 und dem ersten porösen Element 40 angeordnet. Die Hülse 78 ist von der Wandung 38 radial fixiert. Innerhalb der Hülse 78 ist der erste Zufuhrkanal 30 geführt.

Die axiale Ausdehnung der porösen Elemente 40, 42 richtet sich nach der Brennkammerauslegung. Insbesondere kann durch die Parameter "Porosität", "axiale Ausdehnung" und "Flächenverhältnisse der Strömungsquerschnitte" (von z. B. "zweite Auslassfläche 46 zu erster Auslassfläche 44 (bzw. Summe der ersten Auslassflächen 44)" zwischen 10/1 und 5/1, z. B. 7/1, auch in Abhängigkeit des Massenverhältnisses an Fluid 2 zu Fluid 1) durch die porösen Elemente 40, 42 der erforderliche Druckverlust, die Strömungsgeschwindigkeit (z. B. zwischen 1 m/s und 20 m/s) und der Massenstrom an Brennstoff und/oder Oxidator durch die jeweiligen porösen Elemente 40, 42 ausgelegt werden. Das Flächenverhältnis kann so eingestellt werden, dass das Flächenverhältnis der Auslassflächen z. B. dem Mischungsverhältnis mit optimaler Leistung entspricht. Die Strömungsgeschwindigkeiten können vorzugsweise so ausgelegt sein, dass das im Betrieb in den Brennraum 20 einströmende erste Fluid 62 in die radial umgebende Strömung des zweiten Fluids 64 eindringt, um eine adäquate Mischung zu erzeugen.

In beiden Ausbildungsvarianten strömt im Betrieb das zweite Fluid 64 über die (z. B. im Vergleich zu Düsen oder Bohrungen) vergleichsweise große zweite Auslassfläche 46 wandnah in einer diffusen Ringsströmung in den Brennraum 20 ein. Durch die diffuse und flächige Ausströmung wird ein vergleichsweise langsam strömender, dichter Kühlfilm an der Innenseite der Brennkammerwandung 58 erzeugt. Dieser Kühlfilm verhindert eine Überhitzung der Brennkammerwandung 58, insbesondere durch Reduktion des Wärmestroms in die Brennkammerwandung 58. Im Vergleich zu einem z. B. durch Injektorbohrungen erzeugten Kühlfilm wird ein gleichmäßig dickerer Kühlfilm einhergehend mit einer gleichmäßigen Verteilung der Wärmelasten an der Brennkammerwandung 58 erreicht.

Im Betrieb der Brennkammeranordnung 10 gemäß der ersten Ausführungsvariante ruft der Impuls des austretenden ersten Fluids 62, das mit höherer Geschwindigkeit als das zweite Fluid in den Brennraum 20 eintritt, beim Auftreffen auf den durch das zweite Fluid 64 gebildeten Film eine vergleichsweise starke Turbulenz hervor. Diese Turbulenz begünstigt die Vermischung und erlaubt eine hohe Verbrennungseffizienz. Vorzugsweise ist der Impuls (bzw. die Geschwindigkeit und/oder Strömungsrichtung) des ersten Fluids 62 unter Auslegung der Bohrungen 78 so ausgelegt, dass das erste Fluid 62 nicht vollständig zu der Brennkammerwandung 58 durchdringt, sondern eine gewisse Filmdicke zu Kühlzwecken erhalten bleibt. Durch die stromab des Vorsprungs 48 gebildete Rezirkulationszone 74 kann über einen weiten Betriebsbereich eine stabile Verbrennung bei hoher Verbrennungseffizienz erreicht werden.

Im Betrieb der Brennkammeranordnung 10 gemäß der zweiten Ausbildungsvariante strömt das erste Fluid 62 zumindest näherungsweise ausschließlich radial (bzgl. der Hauptströmungsrichtung) aus dem Vorsprung 48 aus. Aufgrund des senkrechten Aufeinandertreffens der Strömungen des ersten Fluids 62 und des zweiten Fluids 64 ergeben sich mehrere Wirbel bzw. Totwasser- und Rezirkulationszonen 74 stromab der Injektoranordnung 18, die die Reaktionszone (Flamme bzw. die Verbrennungszone) stabilisieren. Die Auslegung erfolgt vorzugsweise wiederum derart, dass eine gewisse Filmdicke zu Kühlzwecken erhalten bleibt. Auf diese Weise kann ebenfalls über einen weiten Betriebsbereich eine hohe Verbrennungseffizienz erreicht werden. Die vergleichsweise großen Auslassflächen 44, 46 bewirken geringere Strömungsgeschwindigkeiten und damit geringere Druckverluste. Zudem erlauben sie eine gute Durchmischung der beiden Fluide 62, 64 und eine gute Drosselung des Massenstroms.

Zusammenfassend kann durch die erfindungsgemäße Brennkammeranordnung 10 unter Erzeugung einer vorteilhaften Kühlfilmwirkung eine optimierte Durchmischung erreicht werden, die eine hohe Verbrennungseffizienz bei kompakter Bauweise bewirkt.

## Patentansprüche

1. Brennkammeranordnung (10) mit einem entlang einer Längsachse (L) ausgerichteten, von einer Brennkammerwandung (58) in axialer Richtung radial umlaufend umgrenzten Brennraum (20) und mit einer stirnseitig des Brennraums (20) angeordneten Injektoranordnung (18) zum Einbringen reaktiver Fluide (62, 64) in den Brennraum (20), umfassend eine erste Injektoreinrichtung (24) mit einer ersten Auslassanordnung (34) mit zumindest einer ersten Auslassfläche (44) zum Einbringen des ersten Fluids (62) und eine zweite Injektoreinrichtung (26) mit einer zweiten Auslassanordnung (36) mit zumindest einer zweiten Auslassfläche (46) zum Einbringen des zweiten Fluids (64), wobei die zumindest eine, insbesondere ringförmige, zweite Auslassfläche (46) die zumindest eine erste Auslassfläche (44) unter Zwischenordnung einer fluidundurchlässigen Trennung ringförmig radial umlaufend umgebend angeordnet ist und ein stirnseitig an den Brennraum (20) angrenzendes zweites poröses Element (42) zur Bildung der zweiten Auslassfläche (46) zu dem Brennraum (20) aufweist,
**dadurch gekennzeichnet,**
**dass** die zweite Auslassfläche (46) radial angrenzend von der den Brennraum (20) in axialer Richtung radial umlaufend umgrenzenden Brennkammerwandung (58) umgeben ist.

2. Brennkammeranordnung (10) nach Anspruch 1,
**dadurch gekennzeichnet,**
**dass** eine radiale Dicke (d) der zweiten Auslassfläche (46) zwischen 2/3 und 1/5, vorzugsweise zwischen 1/2 und 1/4, eines Durchmessers (D) einer eintrittsseitig an dem Brennraum (20) angeordneten Stirnseite (19) beträgt, der vorzugsweise dem Durchmesser des Brennraums (20) zumindest im Wesentlichen entspricht.

3. Brennkammeranordnung (10) nach einem der Ansprüche 1 oder 2,
**dadurch gekennzeichnet,**
**dass** die zweite Injektoreinrichtung (26) zumindest einen stromauf an das zweite poröse Element (42) angrenzenden, insbesondere ringförmigen, Verteilerraum (28) aufweist, durch welchen das zweite Fluid (64) in das poröse Element (62) eintreten kann.

4. Brennkammeranordnung (10) nach Anspruch 3,
**dadurch gekennzeichnet,**
**dass** zumindest ein zweiter Zufuhrkanal (32) zur Zufuhr des zweiten Fluids (64) in den Verteilerraum (28) vorhanden ist, der von einem stromabseitigen Ende des Brennraums (20), und/oder zumindest teilweise in thermischem Kontakt zu einer an dem stromabseitigen Ende des Brennraums (20) anschließenden Düsenanordnung (22), innerhalb der Brennkammerwandung (58) geführt ist und in den Verteilerraum (28) mündet.

5. Brennkammeranordnung (10) nach Anspruch 4,
**dadurch gekennzeichnet,**
**dass** mehrere zweite Zufuhrkanäle (32) in den Verteilerraum (28) münden, deren Mündungen (33) symmetrisch bezüglich des Verteilerraums (28) verteilt angeordnet sind.

6. Brennkammeranordnung (10) nach einem der vorhergehenden Ansprüche,
**dadurch gekennzeichnet,**
**dass** das zweite poröse Element (42) formschlüssig innerhalb eines Brennkammermaterials (60) aufgenommen ist, wobei es am stromabseitigen Ende insbesondere durch eine geeignete geometrische Formgebung, wie einen Anschlag, axial fixiert ist.

7. Brennkammeranordnung (10) nach einem der vorhergehenden Ansprüche,
**dadurch gekennzeichnet,**
**dass** die erste Injektoreinrichtung (24) einen ersten Zufuhrkanal (30) zur Zufuhr eines ersten Fluids (62) an die erste Auslassanordnung (34) umfasst, der zentral auf der Längsachse (L) verläuft und insbesondere radial zumindest bereichsweise von dem Verteilerraum (28) und/oder dem zweiten porösen Element umgeben ist, und/oder
**dass** die erste Injektoreinrichtung (24) einen Vorsprung (48) in den Brennraum (20) umfasst, an dem die zumindest eine erste Auslassfläche (44) angeordnet ist, wobei die zumindest eine erste Auslassfläche (44) der zweiten Auslassfläche (46) axial zum Brennraum (20) hin vorgelagert ist.

8. Brennkammeranordnung (10) nach einem der vorhergehenden Ansprüche,
**dadurch gekennzeichnet,**
**dass** die erste Auslassanordnung (34) derart ausgebildet ist, dass das erste Fluid (62) mit einer radial nach außen gerichteten Richtungskomponente zugebbar bzw. zugegeben ist.

9. Brennkammeranordnung (10) nach Anspruch 8,
**dadurch gekennzeichnet,**
**dass** die erste Auslassanordnung (34) in dem Vorsprung (48) angeordnete und daraus austretende, radial-axial verlaufende Auslasskanäle, insbesondere Bohrungen (76), umfasst, mittels welchen das erste Fluid (62) in einem Winkel (α) zwischen 20° und 80°, vorzugsweise zwischen 30° und 60°, bezüglich der axialen Richtung in den Brennraum (20) zugebbar bzw. zugegeben ist.

10. Brennkammeranordnung (10) nach Anspruch 9,
**dadurch gekennzeichnet,**
**dass** die Auslasskanäle (76) in Umlaufrichtung äquidistant und axial auf einer oder mehreren Höhe/n angeordnet sind.

11. Brennkammeranordnung (10) nach Anspruch 9 oder 10,
**dadurch gekennzeichnet,**
**dass** der erste Zufuhrkanal (30) stromab innerhalb eines konischen Endabschnitts (50), insbesondere innerhalb des Vorsprungs (48), in die Auslasskanäle (76) der ersten Auslassanordnung (34) übergeht.

12. Brennkammeranordnung (10) nach Anspruch 8,
**dadurch gekennzeichnet,**
**dass** der Vorsprung (48) ein erstes poröses Element (40) umfasst, insbesondere durch dieses gebildet ist.

13. Brennkammeranordnung (10) nach Anspruch 12,
**dadurch gekennzeichnet,**
**dass** das erste poröse Element (40) derart ausgebildet und/oder angeordnet ist, dass das erste Fluid (62) mit, insbesondere ausschließlich, radialer Richtungskomponente aus dem ersten porösen Element (40) in den Brennraum (20) eintritt.

14. Brennkammeranordnung (10) nach Anspruch 13,
**dadurch gekennzeichnet,**
**dass** das erste poröse Element (40) zumindest im Bereich des Vorsprungs (48) einen ringförmigen Querschnitt aufweist, insbesondere zylindrisch ausgebildet ist, wobei eine axial stromab begrenzende Stirnfläche (54) fluidundurchlässig ausgebildet ist.

15. Brennkammeranordnung (10) nach einem der vorhergehenden Ansprüche,
**dadurch gekennzeichnet,**
**dass** das zweite poröse Element (42) und/oder das erste poröse Element (40) gegenüber dem umgebenden Material durch Einpressen und/oder mittels eines Dichtelements, z. B. einer Teflonschicht, gedichtet ist.

## Claims

1. Combustion chamber arrangement (10) comprising a combustion chamber (20) aligned along a longitudinal axis (L) and radially circumferentially bounded in the axial direction by a combustion chamber wall (58), and comprising an injector arrangement (18) arranged on the end face of the combustion chamber (20) for introducing reactive fluids (62, 64) into the combustion chamber (20), comprising a first injector device (24) having a first outlet arrangement (34) having at least a first outlet surface (44) for introducing the first fluid (62) and a second injector device (26) having a second outlet arrangement (36) having at least a second outlet surface (46) for introducing the second fluid (64), the at least one, in particular annular, second outlet surface (46) being arranged so as to radially circumferentially surround the at least one first outlet surface (44) annularly with a fluid-impermeable separation arranged in between, and having a second porous element (42) adjacent to the combustion chamber (20) on the end face for forming the second outlet surface (46) to the combustion chamber (20),
**characterized**
**in that** the second outlet surface (46) is surrounded radially adjacently by the combustion chamber wall (58) radially circumferentially bounding the combustion chamber (20) in the axial direction.

2. Combustion chamber arrangement (10) according to claim 1,
**characterized**
**in that** a radial thickness (d) of the second outlet surface (46) is between 2/3 and 1/5, preferably between 1/2 and 1/4, of a diameter (D) of an end face (19) arranged on the inlet side of the combustion chamber (20), which preferably corresponds at least substantially to the diameter of the combustion chamber (20).

3. Combustion chamber arrangement (10) according to either claim 1 or claim 2, **characterized**
**in that** the second injector device (26) has at least one, in particular annular, distributor chamber (28) which is adjacent to the second porous element (42) upstream thereof and through which the second fluid (64) can enter the porous element (62).

4. Combustion chamber arrangement (10) according to claim 3,
**characterized**
**in that** at least one second supply channel (32) for supplying the second fluid (64) into the distributor chamber (28) is provided, which is guided from a downstream end of the combustion chamber (20), and/or at least partially in thermal contact with a nozzle arrangement (22) adjoining the downstream end of the combustion chamber (20), within the combustion chamber wall (58) and opens into the distributor chamber (28).

5. Combustion chamber arrangement (10) according to claim 4,
**characterized**
**in that** a plurality of second supply channels (32) open into the distributor chamber (28), the openings (33) of which are arranged symmetrically distributed with respect to the distributor chamber (28).

6. Combustion chamber arrangement (10) according to any of the preceding claims,
**characterized**
**in that** the second porous element (42) is form-fittingly received within a combustion chamber material (60), it being axially fixed at the downstream end in particular by a suitable geometric shape, such as a stop.

7. Combustion chamber arrangement (10) according to any of the preceding claims,
**characterized**
**in that** the first injector device (24) comprises a first supply channel (30) for supplying a first fluid (62) to the first outlet arrangement (34), which channel extends centrally on the longitudinal axis (L) and is surrounded, in particular radially, at least in some regions by the distributor chamber (28) and/or the second porous element, and/or
**in that** the first injector device (24) comprises a projection (48) into the combustion chamber (20), on which the at least one first outlet surface (44) is arranged, the at least one first outlet surface (44) of the second outlet surface (46) being placed axially in front of the combustion chamber (20).

8. Combustion chamber arrangement (10) according to any of the preceding claims,
**characterized**
**in that** the first outlet arrangement (34) is designed such that the first fluid (62) can be supplied or is supplied with a radially outwardly directed directional component.

9. Combustion chamber arrangement (10) according to claim 8,
**characterized**
**in that** the first outlet arrangement (34) comprises outlet channels, in particular bores (76), which are arranged in the projection (48) and emerge therefrom and extend radially-axially, by means of which the first fluid (62) can be supplied or is supplied into the combustion chamber (20) at an angle (α) of between 20° and 80°, preferably between 30° and 60°, with respect to the axial direction.

10. Combustion chamber arrangement (10) according to claim 9,
**characterized**
**in that** the outlet channels (76) are arranged equidistantly and axially at one or more heights in the circumferential direction.

11. Combustion chamber arrangement (10) according to either claim 9 or claim 10, **characterized**
**in that** the first supply channel (30) merges downstream within a conical end portion (50), in particular within the projection (48), into the outlet channels (76) of the first outlet arrangement (34).

12. Combustion chamber arrangement (10) according to claim 8,
**characterized**
**in that** the projection (48) comprises a first porous element (40), in particular is formed thereby.

13. Combustion chamber arrangement (10) according to claim 12,
**characterized**
**in that** the first porous element (40) is designed and/or arranged such that the first fluid (62) with, in particular exclusively, a radial directional component enters the combustion chamber (20) from the first porous element (40).

14. Combustion chamber arrangement (10) according to claim 13,
**characterized**
**in that** the first porous element (40) has an annular cross-section at least in the region of the projection (48), in particular is cylindrical, an axially downstream bounding end face (54) being impermeable to fluid.

15. Combustion chamber arrangement (10) according to any of the preceding claims,
**characterized**
**in that** the second porous element (42) and/or the first porous element (40) is sealed with respect to the surrounding material by pressing in and/or by means of a sealing element, e.g. a Teflon layer.

## Revendications

1. Agencement de chambre de combustion (10) comportant une chambre de combustion (20) aligné le long d'un axe longitudinal (L) et délimité de manière radialement périphérique par une paroi de chambre de combustion (58) dans la direction axiale, et comportant un agencement d'injection (18) disposé du côté frontal de la chambre de combustion (20) pour l'introduction de fluides réactifs (62, 64) dans la chambre de combustion (20), comprenant un premier dispositif d'injection (24) comportant un premier agencement de sortie (34) comportant au moins une première surface de sortie (44) pour l'introduction du premier fluide (62) et un second dispositif d'injection (26) comportant un second agencement de sortie (36) comportant au moins une seconde surface de sortie (46) pour l'introduction du second fluide (64), l'au moins seconde surface de sortie (46), en particulier annulaire, étant disposée de manière à entourer de façon annulaire et radiale l'au moins une première surface de sortie (44) par interposition d'une séparation imperméable aux fluides, et présentant un second élément poreux (42) adjacent à la chambre de combustion (20) sur le côté frontal pour la formation de la seconde surface de sortie (46) sur la chambre de combustion (20),
**caractérisé en ce que**
la seconde surface de sortie (46) est entourée de manière radialement adjacente par la paroi de chambre de combustion (58) qui délimite de manière radialement périphérique la chambre de combustion (20) dans la direction axiale.

2. Agencement de chambre de combustion (10) selon la revendication 1,
**caractérisé en ce**
**qu'**une épaisseur (d) radiale de la seconde surface de sortie (46) est comprise entre 2/3 et 1/5, de préférence entre 1/2 et 1/4, d'un diamètre (D) d'un côté frontal (19) disposé sur le côté d'entrée de la chambre de combustion (20), lequel diamètre correspond de préférence au moins sensiblement au diamètre de la chambre de combustion (20).

3. Agencement de chambre de combustion (10) selon l'une des revendications 1 ou 2,
**caractérisé en ce que**
le second dispositif d'injection (26) présente au moins une chambre de distribution (28), en particulier annulaire, adjacent en amont au second élément poreux (42), le second fluide (64) pouvant entrer dans l'élément poreux (62) à travers la chambre de distribution.

4. Agencement de chambre de combustion (10) selon la revendication 3,
**caractérisé en ce**
**qu'**il existe au moins un second canal d'amenée (32) pour l'amenée du second fluide (64) dans la chambre de distribution (28), lequel second canal d'amenée est guidé à l'intérieur de la paroi de chambre de combustion (58) à partir d'une extrémité aval de la chambre de combustion (20), et/ou au moins partiellement en contact thermique avec un agencement de buse (22) adjacent à l'extrémité aval de la chambre de combustion (20), et débouche dans la chambre de distribution (28).

5. Agencement de chambre de combustion (10) selon la revendication 4,
**caractérisé en ce que**
plusieurs seconds canaux d'amenée (32) débouchent dans la chambre de distribution (28), les embouchures (33) desdits canaux d'amenée étant disposées de manière répartie symétriquement par rapport à la chambre de distribution (28).

6. Agencement de chambre de combustion (10) selon l'une des revendications précédentes,
**caractérisé en ce que**
le second élément poreux (42) est reçu par complémentarité de forme à l'intérieur d'un matériau de chambre de combustion (60), ledit second élément poreux étant fixé axialement à l'extrémité aval, en particulier par un moulage géométrique approprié, notamment une butée.

7. Agencement de chambre de combustion (10) selon l'une des revendications précédentes,
**caractérisé en ce que**
le premier dispositif d'injection (24) comprend un premier canal d'amenée (30) pour l'amenée d'un premier fluide (62) au premier agencement de sortie (34), lequel premier canal d'amenée s'étend de façon centralisée sur l'axe longitudinal (L) et est entouré en particulier radialement au moins dans certaines zones par la chambre de distribution (28) et/ou par le second élément poreux, et/ou
**en ce que** le premier dispositif d'injection (24) comprend une saillie (48) dans la chambre de combustion (20), saillie sur laquelle est disposée une première surface de sortie (44), l'au moins une surface de sortie (44) de la seconde surface de sortie (46) étant placée axialement à l'avant de la chambre de combustion (20).

8. Agencement de chambre de combustion (10) selon l'une des revendications précédentes,
**caractérisé en ce que**
le premier agencement de sortie (34) est conçu de telle sorte que le premier fluide (62) peut être ajouté ou est ajouté au moyen d'une composante directionnelle dirigée radialement vers l'extérieur.

9. Agencement de chambre de combustion (10) selon la revendication 8,
**caractérisé en ce que**
le premier agencement de sortie (34) comprend des canaux de sortie, en particulier des trous (76), qui s'étendent radialement-axialement, sont disposés dans la saillie (48) et sortent de celle-ci, le premier fluide (62) pouvant être ajouté ou étant ajouté dans la chambre de combustion (20) à l'aide desdits canaux de sortie suivant un angle (α) compris entre 20° et 80°, de préférence entre 30° et 60°, par rapport à la direction axiale.

10. Agencement de chambre de combustion (10) selon la revendication 9,
**caractérisé en ce que**
les canaux de sortie (76) sont disposés de manière équidistante dans la direction périphérique et axialement sur une ou plusieurs hauteurs.

11. Agencement de chambre de combustion (10) selon la revendication 9 ou 10,
**caractérisé en ce que**
le premier canal d'amenée (30) se raccorde en aval, à l'intérieur d'une section d'extrémité conique (50), en particulier à l'intérieur de la saillie (48), aux canaux de sortie (76) du premier agencement de sortie (34).

12. Agencement de chambre de combustion (10) selon la revendication 8,
**caractérisé en ce que**
la saillie (48) comprend un premier élément poreux (40), est en particulier formée par celui-ci.

13. Agencement de chambre de combustion (10) selon la revendication 12,
**caractérisé en ce que**
le premier élément poreux (40) est conçu et/ou disposé de telle sorte que le premier fluide (62) entre dans la chambre de combustion (20) au moyen, en particulier exclusivement, de composantes directionnelles radiales à partir du premier élément poreux (40).

14. Agencement de chambre de combustion (10) selon la revendication 13,
**caractérisé en ce que**
le premier élément poreux (40) présente une section transversale annulaire au moins dans la zone de la saillie (48), est en particulier de forme cylindrique, une surface frontale (54) délimitant axialement en aval étant conçue imperméable aux fluides.

15. Agencement de chambre de combustion (10) selon l'une des revendications précédentes,
**caractérisé en ce que**
le second élément poreux (42) et/ou le premier élément poreux (40) est rendu étanche, par rapport au matériau l'entourant, par pressage et/ou à l'aide d'un élément d'étanchéité, par exemple une couche de téflon.
